Europäisches Patentamt

European Patent Office

Office européen des brevets

(19)

(11) Veröffentlichungsnummer: **0 162 200**
**B1**

(12) # EUROPÄISCHE PATENTSCHRIFT

(45) Veröffentlichungstag der Patentschrift:
**13.07.88**

(21) Anmeldenummer: **85102121.2**

(22) Anmeldetag: **27.02.85**

(51) Int. Cl.⁴: **H 04 B 3/44**

(54) **Breitband-Kommunikations-System.**

(30) Priorität: **31.03.84 DE 3412112**

(43) Veröffentlichungstag der Anmeldung:
**27.11.85 Patentblatt 85/48**

(45) Bekanntmachung des Hinweises auf die Patenterteilung:
**13.07.88 Patentblatt 88/28**

(84) Benannte Vertragsstaaten:
**AT BE CH DE FR GB LI NL**

(56) Entgegenhaltungen:
**DE - A - 1 904 472**
**DE - A - 2 614 075**
**DE - A - 2 815 303**
**DE - C - 861 110**
**GB - A - 1 598 553**

**DIN 57 800, Teil 12, September 1981, VDE-Verlag, Seite 4, Berlin, DE;**

(73) Patentinhaber: **ANT Nachrichtentechnik GmbH,**
**Gerberstrasse 33, D-7150 Backnang (DE)**

(72) Erfinder: **Form, Ernst, Theodor-Heuss-Strasse 51,**
**D-7158 Sulzbach/Murr (DE)**

**Beschreibung**

Die Erfindung betrifft ein Breitband-Kommunikationssystem gemäß dem Oberbegriff des Patentanspruchs. Ein solches System ist im Prospekt «Empfangs- und Übertragungseinrichtungen für moderne Breitband-Kommunikations-Anlagen» der Fa. ANT Nachrichtentechnik Gmbh, Backnang, Druck-Nr. ANT. 1445a 07.83, beschrieben.

Dieses System überträgt von einer Kopfstelle aus über ein Koaxialkabel mehrere Fernseh- und Tonrundfunkprogramme an die angeschlossenen Wohnungen. In das Koaxialkabel sind Zwischenverstärker eingefügt, die zur Energieversorgung über das Koaxialkabel von einer speisenden Stelle aus ferngespeist werden. Zur Fernspeisung wird eine Fernspeise-Wechselspannung von 65 V mit einer Frequenz von 50 Hz verwendet.

Bei der Entwicklung dieses Systems erlaubten die VDE-Bestimmungen (DIN 5780 Teil 3) noch eine Spannung von 65 V, ohne daß Schutzmaßnahmen gegen Berühren notwendig waren. Inzwischen sind diese Bestimmungen geändert worden, und es ist bei einer Frequenz von 50 Hz nur noch eine Spannung von 50 V zulässig. Es ist also eine Anpassung an die geänderten Bestimmungen notwendig, wobei aber die übertragbare Fernspeise-Leistung noch erhöht werden soll. Diese Aufgabe allein durch Herabsetzung der Spannung und Erhöhung des Stromes zu lösen, scheidet aus, da die vom Fernspeisestrom durchflossenen Koaxialkabel schon beim bekannten System bis an die Grenze des zulässigen Spannungsabfalls betrieben werden und eine Querschnittserhöhung nicht durchführbar ist.

Der Erfindung liegt also die Aufgabe zugrunde, ein Breitband-Kommunikationssystem der obigen Art anzugeben, welches es erlaubt zur Fernspeisung der Zwischenverstärker eine höhere Leistung als beim bekannten System zu übertragen ohne Erhöhung der Strombelastung der vom Fernspeisestrom durchflossenen Schaltmittel unter Einhaltung der Spannungsgrenze, bei der laut VDE-Bestimmungen kein Schutz gegen Berührung notwendig ist.

Diese Aufgabe wird durch ein Breitband-Kommunikationssystem nach dem Patentanspruch gelöst.

Die Anwendung von Fernspeise-Wechselspannungen mit Frequenzen im Tonfrequenzbereich und unterhalb der unteren Grenzfrequenz der Nutzsignale ist an sich aus der deutschen Offenlegungsschrift 19 04 472 bekannt.

Das erfindungsgemäße System hat den Vorteil, daß die Übertrager in den Zwischenverstärkern, die zur Gewinnung der Betriebsspannungen der Zwischenverstärker aus der Fernspeise-Wechselspannung dienen, sehr klein gehalten werden können. Die Erhöhung der Fernspeise-Leistung erlaubt es, Zwischenverstärker mit einer größeren Bandbreite einzusetzen, wobei die größere Bandbreite durch eine größere Leistungsaufnahme erkauft wird. So kann die Zahl der übertragenen Fernseh- und Tonrundfunkkanäle erhöht werden bei Beibehaltung der bisher schon überbrückbaren Entfernung und Weiterverwendung der bisherigen Koaxialkabel-Typen.

Im folgenden wird ein Ausführungsbeispiel des erfindungsgemäßen Breitband-Kommunikationssystems beschrieben. Es überträgt über ein baumförmiges Koaxialkabelnetz von einer Kopfstelle aus im Frequenzbereich von 47 MHz bis 440 MHz eine Anzahl Fernseh- und Tonrundfunkprogramme an die angeschlossenen Wohnungen. Für eine Übertragung in der Gegenrichtung ist der Bereich von 5 MHz bis 10 MHz vorgesehen. Die Nutzsignale umfassen also den Bereich zwischen der unteren Grenzfrequenz von 5 MHz und einer oberen Grenzfrequenz von 440 MHz.

In das Koaxialkabelnetz sind Zwischenverstärker eingefügt, die zur Versorgung mit den erforderlichen Betriebsspannungen von einer speisenden Stelle aus über das Koaxialkabel ferngespeist werden. In großen Netzen sind mehrere speisende Stellen vorgesehen. Eine solche speisende Stelle weist mindestens ein Fernspeisegerät auf, welches aus dem öffentlichen Energieversorgungsnetz (220 V, 50 Hz) die Fernspeise-Wechselspannung gewinnt. Diese wird über Fernspeiseweichen in das Koaxialkabel eingekoppelt und in den Zwischenverstärkern wieder ausgekoppelt.

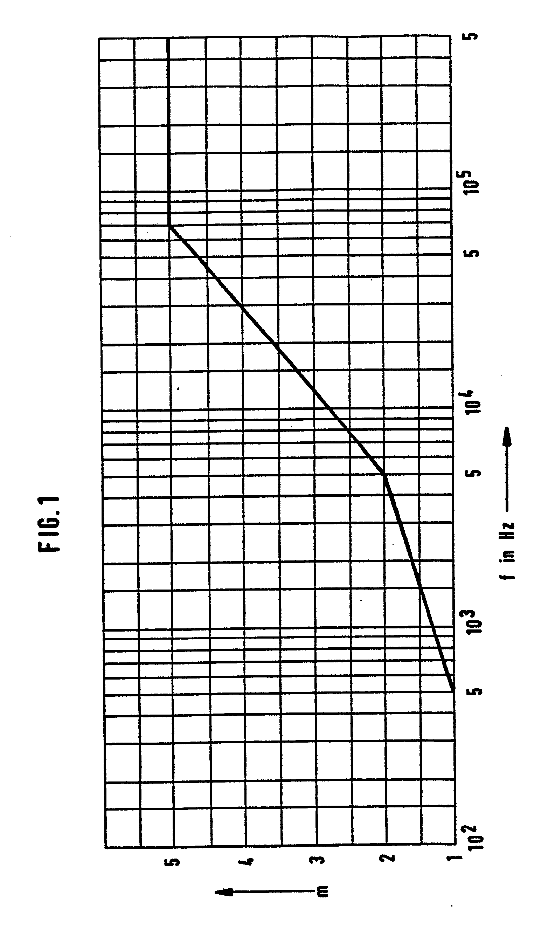

Mit Rücksicht auf einen bestimmten Spannungsabfall und dem gegebenen Leiterquerschnitt kann ein bestimmter Fernspeisestrom nicht überschritten werden. Um bei diesem Strom eine hohe Fernspeiseleitung übertragen zu können, muß die Fernspeisespannung mehr als 50 V betragen. Gemäß der VDE-Bestimmung (Entwurf) DIN 57800 Teil 12, Tabelle 1 und Bild 1, kann bei Frequenzen über 500 Hz eine höhere Spannung als 50 V zugelassen werden, ohne daß Schutzmaßnahmen gegen Berühren notwendig sind, wenn die spannungsführenden Teile als solche erkennbar sind. Dieser höhere Effektivwert der zulässigen Spannung läßt sich errechnen, indem man 50 V mit einem Spannungsfaktor m multipliziert. Dieser Spannungsfaktor m ergibt sich in Abhängigkeit von der Frequenz f aus der Figur 1, die dem Bild 1 der VDE-Bestimmung (Entwurf) DIN 57800 Teil 12 entspricht.

So ist das Fernspeisegerät dieses Ausführungsbeispiels so bemessen, daß die Frequenz f der Fernspeise-Wechselspannung 20 kHz beträgt. Aus der Figur ergibt sich ein Spannungsfaktor m = 3,3 und damit eine zulässige Fernspeise-Wechselspannung von 165 V.

Die Kurvenform der Fernspeise-Wechselspannung muß möglichst sinusförmig sein. Der Klirrfaktor muß so klein gewählt werden, daß eine Störstrahlung und in den Frequenzbereich der Nutzsignale fallende Oberwellen nicht auftreten oder vernachlässigbar klein sind.

**Patentanspruch**

Breitband-Kommunikationssystem zur Übertragung von mehrere Fernseh- und Tonrundfunkprogramme umfassenden Nutzsignalen, wobei das Breitband-Kommuikationssystem mehrere Zwischenverstärker und mindestens eine speisende Stelle umfaßt, wobei die Zwischenverstärker von der speisenden Stelle mittels Fernspeise-Wechselspannung ferngespeist werden, wobei die Frequenz der Fernspeise-Wechselspannung zwischen 500 Hz und der unteren Grenzfrequenz der Nutzsignale liegt, und wobei der Effektivwert der Fernspeise-Wechselspannung annähernd, jedoch nicht mehr als 50 V, multipliziert mit einem Spannungsfaktor m gemäß der Figur 1, beträgt.

## Claim

Wide band commmunications system for the transmission of wanted signals comprising several television and sound radio programmes, wherein the wide band communications system comprises several intermediate amplifiers and at least one feed point, wherein the intermediate amplifiers are remotely fed from the feed point by means of remote feed alternating voltage, wherein the frequency of the remote feed alternating voltage lies between 500 hertz and the lower limit frequency of the wanted signals and wherein the effective value of the remote feed alternating voltage amounts to nearly, however not more than 50 volts multiplied by a voltage factor m according to the figure 1.

## Revendication

1. Système de communication à large bande pour la transmission de plusieurs programmes de télévision et de radiodiffusion comportant des signaux utiles, le système de communication à large bande comportant plusieurs amplificateurs intermédiaires at au moins un poste d'alimentation, les amplificateurs intermédiaires étant alimentés à distance depuis ce poste d'alimentation au moyen d'une tension alternative d'alimentation à distance, la fréquence de cette tension alternative d'alimentation étant comprise entre 500 Hz et la fréquence-limite inférieure des signaux utiles, et la valeur efficace de la tension alternative d'alimentation à distance étant approximativement égale à une certaine valeur, n'excédant toutefois pas 50 V, multipliée par un facteur de tension m selon la figure 1.

FIG.1